# EUROPÄISCHE PATENTANMELDUNG

(11) **EP 1 179 471 A2**
(43) Veröffentlichungstag der Anmeldung: **13.02.2002**
(21) Anmeldenummer: 01118652.5
(22) Anmeldetag: 03.08.2001
(51) Int. Cl.: B62D 65/00

(54) **Vorrichtung und Verfahren zur Herstellung eines Rohlings für ein Bauteil**

(30) Priorität: 10.08.2000 DE 10039023
(71) Anmelder: Bayerische Motoren Werke Aktiengesellschaft, 80809 München (DE)
(72) Erfinder: Berthold, Klaus, 85521 Ottobrunn (DE)

(57) **Zusammenfassung**

Bei einem neuen Verfahren zur Herstellung eines Bauteils, insbesondere eines Modellbauteils für einen Cubing-Aufbau, wird zunächst ein Rohling hergestellt, bei dem zumindest die Innenkontur der gewünschten Kontur des Modellbauteils angenähert ist. Der Rohling wird in einer Vorrichtung (1) hergestellt, die einen Aufnahmeraum aufweist, der mit einer Vielzahl von Stempeln (6) entsprechend der inneren und der seitlichen Kontur des Modellbauteils universell variiert werden kann.

## Beschreibung

Die Erfindung betrifft eine Vorrichtung zur Herstellung eines Rohlings für ein Bauteil, insbesondere ein Modellbauteil für einen Cubing-Aufbau sowie ein Verfahren zur Herstellung eines Rohlings.

Für sogenannte Cubing-Aufbauten, wie beispielsweise in der DE 43 11 647 A1 oder der DE 198 36 016 A1 beschrieben, werden Modellbauteile eingesetzt, die Abstimm- oder Prüfzwecken dienen und in ihrer Außengeometrie mit hoher Maßgenauigkeit den betreffenden Bauteilen des Fahrzeuges entsprechend. Derartige Modellbauteile werden aus einem Modellwerkstoff, wie zum Beispiel dem Material mit dem Handelsnamen "Ureol" der Fa. Ciba Geigy, hergestellt, indem aus quaderförmigen Rohlingen, die im Handel in vorgegebenen Größen erhältlich sind, das Modellbauteil aus dem Vollen gefräst wird. Durch Verkleben zweier oder mehrerer Quader, bevorzugt unterschiedlicher Größen, entstehen Rohlinge, die der gewünschten Kontur des Modellbauteils möglichst genau angenähert sind.

Nachteilig bei dem bekannten Verfahren ist, dass durch das quaderförmige Ausgangsmaterial aufgrund der entsprechend großen Materialzugaben ein hoher Bearbeitungsaufwand für die Herstellung der Kontur des Modellbauteils entsteht. Für die Herstellung eines jeden Modellbauteils ist eine eigene Aufnahmevorrichtung zum Aufspannen auf der Bearbeitungsmaschine erforderlich. Bei einem Modellbauteil, das sich aus mehreren zusammengeklebten Quadern zusammensetzt, sind nach der Herstellung der endgültigen Kontur die Klebefugen von außen sichtbar.

Aufgabe der Erfindung ist es, die Nachteile des bekannten Verfahrens zu vermeiden und eine Vorrichtung zur Durchführung eines verbesserten Herstellverfahrens für Rohlinge von Bauteilen, insbesondere Modellbauteilen, bereitzustellen.

Diese Aufgabe wird durch die Merkmale der Ansprüche 1 bzw. 15 gelöst.

Anspruch 1 beschreibt eine erfindungsgemäße Vorrichtung, die als Gussvorrichtung für einen Rohling eines Bauteils ausgeführt ist. Der Boden der Gussvorrichtung bildet die Innenkontur des Bauteils nach. Durch die dem gewünschten Bauteil angeglichene Innenkontur reduziert sich der erforderliche Materialeinsatz. Eine spanende Bearbeitung der Innenkontur erübrigt sich in der Regel. Die Außenkontur wird in bekannter Weise durch spanende Bearbeitung hergestellt. Ein Vorteil der erfindungsgemäßen Vorrichtung liegt insbesondere darin, dass durch die Verstellbarkeit der Stempel eine variable Gussvorrichtung geschaffen ist, mit der Bauteile mit unterschiedlichen Innenkonturen gefertigt werden können. Somit ist es beispielsweise möglich, mit einer einzigen Vorrichtung Rohlinge für eine vordere oder eine hintere Seitenwand, ein Türaußenblech, einen Stoßfänger etc. für einen Cubing-Aufbau eines Fahrzeuges herzustellen. Bei entsprechender Größe ist die Vorrichtung in der Lage, die Innenkonturen verschiedenster Fahrzeugbauteile, auch aus unterschiedlichen Fahrzeugbaureihen, nachzubilden. Nach einem einmaligen Aufwand zur Bereitstellung der Vorrichtung steht nachfolgend eine universell einsetzbare Vorrichtung zur Verfügung, mit der über einen langen Zeitraum materialoptimierte Rohlinge zur Herstellung von Bauteilen geformt werden können.

Die Ansprüche 2 bis 14 beschreiben vorteilhafte Ausgestaltungen der Erfindung. Unter anderem ist es dabei möglich, nach Anspruch 11 für die Vorrichtung auch ein Deckelteil vorzusehen, das der Außenkontur des Bauteils mit einer entsprechenden Bearbeitungszugabe nachgebildet ist, so dass sowohl für die Innen- als auch die Außenkontur des Modellbauteils ein nur geringer Materialverlust und insgesamt reduzierte Bearbeitungszeiten möglich sind. Auch kann durch wenigstens eine fremdkrafterzeugende Verstelleinrichtung gemäß Anspruch 12 die Einstellung der Innenkontur erleichtert werden. Eine Automatisierung ist dahingehend möglich, dass durch eine mit den geometrischen Daten des Bauteils gespeiste Steuereinrichtung gemäß Anspruch 13 die Verstelleinrichtung ansteuert und somit die Innenkontur selbsttätig nachgebildet werden kann. Dabei wird beispielsweise der Stellweg der Führungsstangen anhand von CAD-Daten automatisch ermittelt und an die Steuerung der fremdkrafterzeugenden Verstelleinrichtung übergeben. Die Führungsstangen werden z. B. über Stellmotore mit Spindeln in die entsprechende Position gebracht und geklemmt.

Das erfindungsgemäße Verfahren ist durch die einzelnen Verfahrensschritte gemäß Anspruch 15 beschrieben. Die Ansprüche 16 bis 24 beziehen sich auf vorteilhafte Ausgestaltungen dieses Verfahrens.

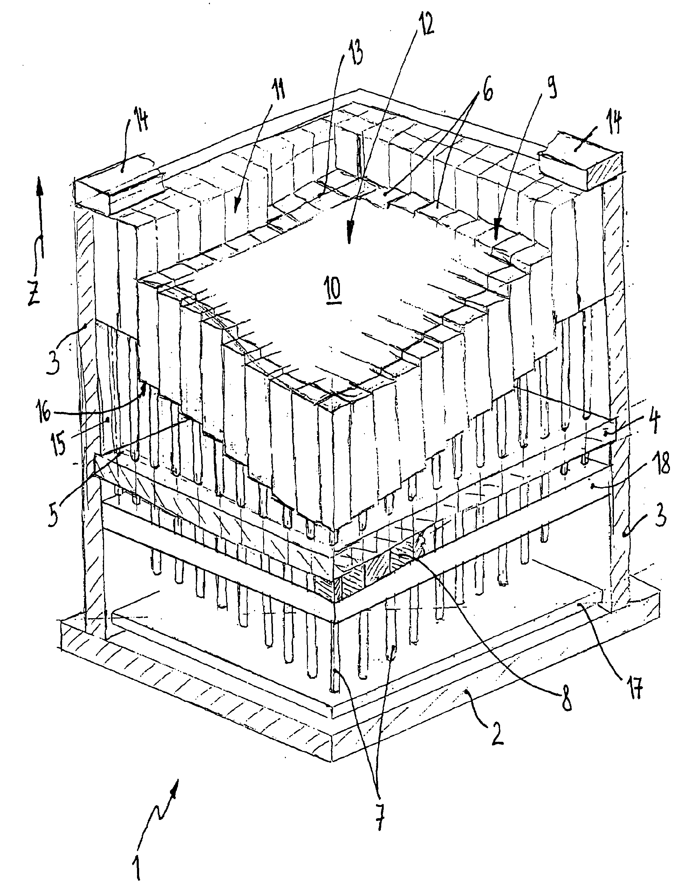

Ein mögliches Ausführungsbeispiel der Erfindung ist in der Zeichnung dargestellt und wird nachfolgend näher beschrieben. Die einzige Figur zeigt eine Vorrichtung zur Herstellung eines Rohlings für ein Bauteil, insbesondere ein Modellbauteil, in perspektivischer, teilweise geschnittener Ansicht.

Eine in ihrer Gesamtheit mit 1 bezeichnete Vorrichtung zur Herstellung eines Rohlings für ein Modellbauteil weist unter anderem eine Bodenplatte 2 sowie vier Seitenwände 3 auf, die in der Schnittdarstellung der Figur nicht vollständig abgebildet sind. Bodenplatte 2 und Seitenwände 3 bilden die tragende Struktur der Vorrichtung 1, in die auf etwa der halben Höhenerstreckung (Z-Richtung gemäß Pfeil Z) eine Führungsplatte 4 unverschiebbar eingesetzt ist. Die Führungsplatte 4 weist eine Vielzahl von Öffnungen 5 auf, in denen quaderförmige Stempel 6 über Führungsstangen 7 in Z-Richtung verschieblich geführt sind. Zur Arretierung der Führungsstangen 7 und damit der Stempel 6 sind unterhalb der Führungsplatte 4 Arretiereinrichtungen 8 vorgesehen.

Die Stempel 6, die jeweils unabhängig voneinander in Z-Richtung verstellbar sind, bilden mit ihren Oberseiten 9 bzw. ihren Seitenflächen 11 einen individuell in seiner Kontur verstellbaren dreidimensional treppenförmigen Boden 10 eines Aufnahmeraumes 12 für einen Gusswerkstoff zur Herstellung eines Modellbauteils. Die seitliche Begrenzung des Aufnahmeraumes 12 erfolgt durch randseitige Stempel 6, die sich in ihrer obersten Position befinden. Reicht die Kontur des Rohlings bis an die Seitenwände 3, so bilden diese selbst die seitliche Begrenzung. Der Aufnahmeraum 12, der im Bereich der aneinandergrenzenden Stempel 6 Fugen 13 aufweist, wird vor dem Einbringen des Gusswerkstoffes durch eine Folie (nicht dargestellt) abgedichtet. Die Folie kann über einen an den Seitenwänden 3 angebrachten Spannrahmen 14 fixiert werden. Um eine möglichst formschlüssige und gleichmäßige Anlage der Folie an den Oberseiten 9 bzw. den Seitenflächen 11 der Stempel 6 zu erreichen, ist eine Einrichtung (nicht dargestellt) vorgesehen, die im Raum 15 zwischen der Unterseite 16 der Stempel 6 und der Oberseite der Führungsplatte 4 einen Unterdruck erzeugt, der sich durch die Fugen 13 zwischen den Stempeln 6 an die Unterseite der Folie fortsetzt und diese formschlüssig an die Stempel 6 anlegt.

Im dargestellten Ausführungsbeispiel erfolgt die Verstellung der Stempel 6 manuell, indem die Stempel 6 einzeln entsprechend der gewünschten Innenkontur des Modellbauteils justiert und anschließend durch die Arretiereinrichtungen 8 in der gewünschten Lage gehalten werden.

Die Arretiereinrichtungen 8 sind beispielsweise, abweichend von der zeichnerischen Darstellung, als zylindrische Buchsen ausgebildet, mit einem äußeren Stahlring und einem inneren Hohlzylinder aus einem gummielastischen Material, in dem die Führungsstangen 7 gegen entsprechenden Widerstand verstellbar sind. Der Widerstand ist so bemessen, dass sich die Stempel 6 auch unter der Last des Gusswerkstoffes nicht absenken.

In bevorzugter Ausgestaltung der Erfindung ist der Widerstand zwischen Arretiereinrichtung 8 und Führungsstange 7 einstellbar. Hierzu ist unterhalb der Führungsplatte 4 und der Arretiereinrichtungen 8 eine Klemmeinrichtung in Form einer Klemmplatte 18 vorgesehen, die nach erfolgter Justierung der Stempel 6 und damit der Führungsstangen 7 an die Unterseite der Arretiereinrichtungen 8 gedrückt wird. Die Arretiereinrichtungen 8 weisen einen äußeren unnachgiebigen Ring sowie einen innenliegenden Hohlzylinder aus gummielastischem Material auf, der axial gegenüber dem äußeren Ring vorsteht. Durch Druck auf die Arretiereinrichtung 8 wird das gummielastische Material des Hohlzylinders in Richtung des Durchtrittsquerschnittes für die Führungsstange 7 gepresst und somit die Reibung zwischen Führungsstange 7 und dem Hohlzylinder erhöht. Der Hohlzylinder aus gummielastischem Material hat beispielsweise in seinem Mittenbereich einen kleineren Innendurchmesser als an seinen beiden Enden, so dass sich bei Erhöhung der Klemmkraft die Breite des Kontaktbereiches zwischen Hohlzylinder und Führungsstange 7 zu den Endbereichen hin vergrößert.

Der Klemmdruck kann beispielsweise stufenlos verändert werden. Als vorteilhaft haben sich die beiden nachfolgend erläuterten Klemmzustände herausgestellt: In einer ersten Stufe (Vorklemmung während der Einstellphase), in der sich der Stempel 6 in seiner obersten Position befindet, wird so viel Haftreibung zwischen der Führungsstange 7 und dem Hohlzylinder aufgebaut, dass das Eigengewicht des Stempels 6 kompensiert wird und dieser ohne äußere Krafteinwirkung in seiner Position verbleibt, jedoch von Hand nach unten in seine Sollposition verschoben werden kann. In einer zweiten Stufe (Vollklemmung während des Gießens und Aushärtens des Rohlings) wird der Hohlzylinder so stark komprimiert, dass sich die Position der Führungsstange 7 auch unter der Belastung durch das Gießharz nicht mehr verändert.

Eine weitere Möglichkeit besteht darin, die Führungsstangen 7 über Konterschrauben/Kontermuttern, die von den Oberseiten 9 der Stempel 6 zugänglich sind, festzulegen.

Alternativ können die einzelnen Stempel 6 auch selbsttätig über nicht dargestellte fremdkraftbetätigte Verstelleinrichtungen justiert werden. Die Arretierung erfolgt hierbei selbsttätig, z. B. pneumatisch, hydraulisch, magnetisch etc. Die Ansteuerung der Verstell- und Arretiereinrichtungen erfolgt beispielsweise über eine Steuereinrichtung, in der die CAD-Daten des herzustellenden Modellbauteils abgespeichert sind. Über die einzelnen Stempel wird die Innenkontur des Bodens 10 selbsttätig durch die Verstelleinrichtungen so nachgebildet, dass ein möglichst geringer Materialverlust an Gusswerkstoff sowie möglichst kurze Bearbeitungszeiten für die Außenkontur erreicht werden.

Über eine Rückholplatte 17 unterhalb der Führungsstangen 7 können die Stempel 6 in ihre oberste Stellung gebracht werden. Nach dem Absenken der Rückholplatte 17 erfolgt die Gestaltung der Innenkontur des Bodens 10, indem die einzelnen Stempel 6 von Hand in die gewünschte Höhenlage nach unten gedrückt werden.

Die Rückholplatte 17 wird beispielsweise durch einen oder mehrere pneumatische Zylinder bewegt, die an ihrer Unterseite angreifen. Die Rückholplatte 17 kann alternativ auch manuell in Höhenrichtung bewegbar sein. Sie kann in mehrere Abschnitte unterteilt sein, mit einem jeweils selbständigen Antrieb, so dass unterschiedliche Bereiche des von den Stempeln 6 gebildeten Bodens 10 unterschiedlich weit nach oben verschoben werden können.

In gleicher Weise kann auch die oben beschriebene Klemmplatte 18 von einem oder von mehreren Fremdkraftantrieben bewegt werden. Auch ist analog eine Unterteilung in verschiedene Abschnitte möglich.

Nachfolgend ist der gesamte Ablauf zur Herstellung eines Modellbauteils mit einer erfindungsgemäßen Vorrichtung 1 beschrieben.

Nach der Justierung der Stempel 6 zur Nachbildung der Innenkontur des Modellbauteils und der Eingrenzung seiner seitlichen Kontur durch die randseitigen Stempel 6 wird der Boden 10 sowie der Bereich der randseitigen Stempel 6 mit einer Folie abgedeckt, die von dem Spannrahmen 14 gehalten und abgedichtet wird. Durch Aufbringen von Unterdruck im Raum 15 legt sich die Folie eng an die Oberseiten 9 bzw. die Seitenflächen 11 der Stempel 6 an. In den so geschaffenen Aufnahmeraum 12 wird das Gussmaterial eingefüllt, mit der erforderlichen Füllhöhe in Abhängigkeit vom höchsten Punkt der Außenkontur des Modellbauteils.

Sobald das Gussmaterial die erforderliche Festigkeit hat, wird die Unterdruckquelle abgeschaltet. Nach Aushärtung des Gusswerkstoffes wird der so geschaffene Rohling entformt, indem die Stempel 6 in Z-Richtung nach unten verlagert werden. Der der Vorrichtung 1 entnommene Rohling wird nun getempert, um eine vollständige Aushärtung und Entspannung zu erreichen und einen Nachschwund oder möglichen Verzug des Rohlings zu minimieren.

Der Rohling wird anschließend spanend bearbeitet, wobei im Fall von Außenhautbauteilen die nicht sichtbare Innenkontur des Bauteils in der Regel nicht mehr bearbeitet werden muss, im Gegensatz zur Außenkontur, die als Sicht- und Funktionsfläche mit hoher Genauigkeit hergestellt wird.

Bei Modellbauteilen, die in Z-Richtung große Unterschiede in der Materialstärke aufweisen, wie beispielsweise Stoßfängern, können auf den Boden 10 der Vorrichtung 1 Einleger beispielsweise aus einem Hartschaummaterial eingebracht werden, die an diesen Stellen den Zutritt von Gusswerkstoff verhindern. Damit wird über die Gesamterstreckung des Rohlings für das Modellbauteil eine etwa gleichmäßige Materialstärke erreicht, mit dem Vorteil reduzierter Bearbeitungszeiten und eines verringerten Materialeinsatzes.

Je nach Geometrie des Modellbauteils kann die gesamte Vorrichtung vor dem Einbringen des Gusswerkstoffes geneigt werden, um unnötige Materialanhäufungen zu vermeiden.

Zur Anbindung von Aufnahmen an das Modellbauteil werden vor dem Einbringen des Gusswerkstoffes Einlagen in die Vorrichtung 1 eingesetzt, die mit dem Gießvorgang formschlüssig in den Rohling mit eingegossen werden. Derartige Aufnahmen dienen zum einen dazu, den Rohling auf eine Bearbeitungsmaschine aufzuspannen und nachfolgend spanend zu bearbeiten, ggf. um die innere Kontur des Modellbauteils in der erforderlichen Mindestgenauigkeit nachzuarbeiten, insbesondere jedoch um die für die Abstimm- oder Prüfzwecke notwendige hohe Genauigkeit der äußeren Oberfläche und der seitlichen Kontur des Modellbauteils zu erreichen. Andererseits dienen die Aufnahmen nach Fertigstellung des Modellbauteils dazu, das Modellbauteil an einen Cubing-Aufbau anzubinden. Die Aufnahmen können beispielsweise als Befestigungseinrichtungen ausgebildet sein, wie sie in der DE 196 20 465 A1 beschrieben sind. Diese in einem festen Raster, beispielsweise einem quadratischen 100 mm Raster, angeordneten Befestigungseinrichtungen weisen Befestigungsfüße auf, die mit den Einlagen im Rohling verschraubt werden. Zur Gewährleistung der Parallelität und der Einhaltung des vorgegebenen Rasters werden die Einlagen mit der erforderlichen Genauigkeit bearbeitet und maßgenau mit Gewindebohrungen versehen.

Die Folie zur Trennung der Stempel 6 von dem Gusswerkstoff muss eine hohe Elastizität aufweisen, um große Höhenunterschiede zwischen den Oberseiten 9 der einzelnen Stempel 6 ausgleichen und sich entsprechend formgetreu an die Stempel 6 anlegen zu können. Die Folie muss eine Hitzebeständigkeit von bis zu ca. 160 °C aufweisen und zur Gewährleistung des Unterdruckes im Raum 15 luftundurchlässig sein. Zudem muss sich die Folie nach dem Aushärten des Gussmaterials leicht vom Rohling lösen. Die hohe Elastizität und Abdichtungswirkung kann beispielsweise durch eine Latexfolie (z. B. Dicke ca. 0,5 mm, Dehnvermögen bis 800 %) erreicht werden. Andererseits wurde auch mit einer Silikonfolie mit einer Dicke von beispielsweise 1,5 mm ein gutes Trennverhalten erreicht. Die Oberseiten 9 der Stempel 6 weisen beispielsweise ein quadratisches Maß von 50 mm Kantenlänge auf. Die Führungsstangen 7 bestehen beispielsweise aus Aluminium.

## Patentansprüche

1. Vorrichtung zur Herstellung eines Rohlings für ein Bauteil, insbesondere ein Modellbauteil für einen Cubing-Aufbau,
**gekennzeichnet durch** einen Aufnahmeraum (12) für die Einbringung von Gusswerkstoff zur Bildung des Rohlings, der **durch** einen Boden (10) sowie **durch** Seitenwände (3) begrenzt wird, wobei der Boden (10) von einer Mehrzahl in Höhenrichtung (Z) unabhängig voneinander verstellbaren Stempel (6) gebildet wird, die eine geschlossene Bodenfläche ergeben.

2. Vorrichtung nach Anspruch 1,
**dadurch gekennzeichnet, dass** die Stempel (6) unterseitig Führungsstangen (7) aufweisen, die durch Öffnungen (5) in einer unterhalb der Stempel (6) angeordneten Führungsplatte (4) längsverschieblich hindurchgeführt sind.

3. Vorrichtung nach Anspruch 2,
**gekennzeichnet durch** wenigstens eine Einrichtung (8) zur Arretierung der Position der Führungsstangen (7).

4. Vorrichtung nach Anspruch 2 und/oder 3,
**dadurch gekennzeichnet, dass** die Führungsstangen (7) in stahlummantelten Gummihülsen geführt sind.

5. Vorrichtung nach einem der Ansprüche 2 bis 4,
**dadurch gekennzeichnet, dass** die Einrichtung (8) zur Arretierung der Führungsstangen (7) unterhalb der Führungsplatte (4) und oberhalb einer höhenverschieblichen Klemmeinrichtung (18) angeordnet ist, wobei die Klemmeinrichtung (18) so ausgebildet ist, dass sie eine Druckkraft auf die Arretiereinrichtung (8) ausüben kann.

6. Vorrichtung nach einem der Ansprüche 2 bis 4,
**dadurch gekennzeichnet, dass** die Führungsstangen (7) über eine von den Oberseiten (9) der Stempel (6) zugängliche Feststelleinrichtung in Höhenrichtung (Z) festlegbar sind.

7. Vorrichtung nach einem der vorgenannten Ansprüche,
**dadurch gekennzeichnet, dass** die Stempel (6) quaderförmig sind.

8. Vorrichtung nach einem der vorgenannten Ansprüche,
**dadurch gekennzeichnet, dass** die Oberseiten (9) und/oder die Seitenflächen (11) der Stempel (6) von einer Folie abdeckbar sind.

9. Vorrichtung nach Anspruch 8,
**gekennzeichnet durch** eine Einrichtung (14) zur Fixierung der Folie im Bereich der Seitenwände (3) der Vorrichtung (1).

10. Vorrichtung nach Anspruch 8 und/oder 9,
**gekennzeichnet durch** eine Einrichtung zur Aufbringung von Unterdruck in einem Raum (15) unterhalb der Unterseite (16) der Stempel (6).

11. Vorrichtung nach einem der vorgenannten Ansprüche,
**gekennzeichnet durch** ein Deckelteil zum oberseitigen Verschließen des Aufnahmeraumes (12).

12. Vorrichtung nach einem der vorgenannten Ansprüche,
**gekennzeichnet durch** wenigstens eine unterhalb der Führungsplatte (4) angeordnete Verstelleinrichtung zur fremdkraftbewirkten oder fremdkraftunterstützten Bewegung wenigstens einer Führungsstange (7).

13. Vorrichtung nach Anspruch 12,
**dadurch gekennzeichnet, dass** die Verstelleinrichtung mit einer Steuereinrichtung zur selbsttätigen Verstellung der Führungsstangen (7) zusammenwirkt.

14. Vorrichtung nach einem der vorgenannten Ansprüche,
**dadurch gekennzeichnet, dass** unterhalb der Führungsplatte (4) eine Rückholeinrichtung (17) zur Verschiebung wenigstens einer Führungsstange (7) in ihre obere Ausgangsposition vorgesehen ist.

15. Verfahren zur Herstellung eines Modellbauteils, insbesondere für einen Cubing-Aufbau, unter Verwendung einer Vorrichtung nach einem der Ansprüche 1 bis 14,
**gekennzeichnet durch** folgende Schritte:
a) Einstellen der Höhenlage der Stempel (6) entsprechend der gewünschten inneren und/oder seitlichen Kontur des Bauteils
b) Einbringen des Gusswerkstoffes in den Aufnahmeraum (12)
c) Aushärten des Gusswerkstoffes
d) Entnehmen des Rohlings aus dem Aufnahmeraum (12)
e) spanende Bearbeitung des Rohlings, um die gewünschte Kontur zu erreichen

16. Verfahren nach Anspruch 15,
**dadurch gekennzeichnet, dass** der Aufnahmeraum (12) durch ein Deckelteil entsprechend der gewünschten Außenkontur des Bauteils verschlossen, der Gusswerkstoff durch eine Einfüllöffnung eingebracht und nach dem Entnehmen des Rohlings aus dem Aufnahmeraum (12) die Außenkontur des Rohlings spanend bearbeitet wird.

17. Verfahren nach Anspruch 15 und/oder 16,
**dadurch gekennzeichnet, dass** vor dem Einbringen des Gusswerkstoffes die Oberseiten (9) und/oder die Seitenflächen (11) der Stempel (6) mit einer Folie abgedeckt werden.

18. Verfahren nach Anspruch 17,
**dadurch gekennzeichnet, dass** im Raum (15) unterhalb der Unterseiten (16) der Stempel (6) ein Unterdruck angelegt wird, um ein formschlüssiges Anlegen der Folie an die Oberseiten (9) und/oder die Seitenflächen (11) der Stempel (6) zu erreichen.

19. Verfahren nach einem der Ansprüche 15 bis 18,
**dadurch gekennzeichnet, dass** die Höhenlage der Stempel (6) manuell eingestellt wird.

20. Verfahren nach einem der Ansprüche 15 bis 19,
**dadurch gekennzeichnet, dass** die Stempel (6) durch die Rückholeinrichtung (17) in ihre oberste Lage verschoben werden und nachfolgend die Einstellung der gewünschten Höhenlage durch Niederdrücken der einzelnen Stempel (6) erfolgt.

21. Verfahren nach einem der Ansprüche 15 bis 18,
**dadurch gekennzeichnet, dass** die Stempel (6) durch Fremdkraft verstellt werden.

22. Verfahren nach Anspruch 21,
**dadurch gekennzeichnet, dass** die Verstellung der Stempel (6) selbsttätig mittels einer Steuereinrichtung erfolgt, in der geometrische Daten des Bauteils abgelegt sind.

23. Verfahren nach einem der Ansprüche 15 bis 22,
**dadurch gekennzeichnet, dass** zur Bildung der seitlichen Begrenzung des Bauteils randseitige Stempel (6) in ihre oberste Lage verfahren werden.

24. Verfahren nach einem der Ansprüche 15 bis 23, **dadurch gekennzeichnet, dass** vor dem Einbringen des Gusswerkstoffes eine Einlage in den Aufnahmeraum (12) eingebracht wird, die mit dem Gießvorgang in den Rohling eingegossen wird und nach Entnehmen des Rohlings aus der Vorrichtung (1) als Anlagefläche für eine Aufnahme zum Aufspannen des Rohlings bzw. des Bauteils dient.
